# EUROPÄISCHE PATENTSCHRIFT

(11) **EP 1 836 465 B1**
(45) Veröffentlichungstag und Bekanntmachung des Hinweises auf die Patenterteilung: **31.03.2010**
(21) Anmeldenummer: 06700778.1
(22) Anmeldetag: 11.01.2006
(51) Int. Cl.: G01M 1/12, G01G 19/07, B64D 9/00

(54) **VORRICHTUNG UND VERFAHREN ZUR KONTROLLE DES BE- UND/ODER ENTLADEPROZESSES EINES FLUGZEUGS**
DEVICE AND METHOD FOR CONTROLLING THE LOADING AND/OR UNLOADING PROCESS OF AN AEROPLANE
DISPOSITIF ET PROCEDE POUR CONTROLER LE PROCESSUS DE CHARGEMENT ET/OU DE DECHARGEMENT D'UN AVION

(30) Priorität: 13.01.2005 DE 102005001517
(43) Veröffentlichungstag der Anmeldung: 26.09.2007
(73) Patentinhaber: Rheinmetall Defence Electronics GmbH, 28309 Bremen (DE)
(72) Erfinder: TIETJEN, Ronald, 28215 Bremen (DE); EILTS, Torsten, 27793 Wildeshausen (DE); ZISCHOW, Ekkehard, 28357 Bremen (DE); PALUBITZKI, Norbert, 27777 Ganderkesee (DE)
(74) Vertreter: Dietrich, Barbara
(86) Internationale Anmeldenummer: PCT/EP2006/000174
(87) Internationale Veröffentlichungsnummer: WO 2006/074908

(56) Entgegenhaltungen:
- WO-A-01/90707
- DE-A- 10 338 704
- US-A- 4 446 524
- US-A1- 2004 226 996

## Beschreibung

### Technisches Gebiet

Die vorliegende Erfindung betrifft ein Verfahren sowie eine Vorrichtung zur Kontrolle des Be- und/oder Entladeprozesses eines Flugzeugs.

In Abhängigkeit von der Beladungssituation ändern sich das Gewicht und/oder der Schwerpunkt eines Flugzeugs. Das Gesamtgewicht ist einer der entscheidenden Parameter für die Berechnung der benötigten Treibstoffmenge, während der Schwerpunkt besonderen Einfluss auf die Flugeigenschaften sowie die Manövrierbarkeit hat und sich daher in einer definierten Region des Flugzeugs befinden muss. Weiterhin ist zu beachten, dass der Schwerpunkt auch während des Be- und Entladens in einem vorgeschriebenen Bereich liegen muss, um beispielsweise eine Heckberührung des Flugzeugs mit dem Boden (Tail Tip) zu verhindern.

Das Gewicht und der Schwerpunkt des Flugzeugs in beladenem Zustand wird im Vorfeld mittels eines Beladeplans ermittelt, bei dem den Frachtstücken Positionen im Laderaum zugewiesen werden. Dabei werden unter dem Begriff Frachtstück die kleinsten unterscheidbaren Einheiten verstanden, die auch als ULD (Unit Load Device) bezeichnet werden. Dabei kann es sich beispielsweise um Paletten, Container, einzelne Gepäckstücke oder sonstige Gegenstände handeln.

### Stand der Technik

Aufgrund des kritischen Einflusses von Gewicht und Schwerpunktlage auf die Flugleistungen ist eine Kontrolle der Beladung notwendig. Dazu sind bislang ausschließlich fahrwerksbezogene Systeme bekannt, die mit Drucksensoren oder Dehnungsmessstreifen im Bereich der Fahrwerke arbeiten. Aus den Messergebnissen kann auf das Gesamtgewicht des Flugzeugs sowie die Schwerpunktlage geschlossen werden.

Derartige Systeme weisen eine Reihe von Nachteilen auf. So ist ein mechanischer und elektrischer Eingriff in das Fahrwerk, eines der wesentlichsten Teilsysteme eines Flugzeugs, notwendig. Außerdem ergibt sich durch das relativ hohe Flugzeugleergewicht im Verhältnis zu den einzelnen Frachtstücken eine begrenzte Genauigkeit, die durch die Anfälligkeit gegenüber Wind-, Regen- und Schneelasten noch weiter verringert wird. Des Weiteren kann der Einfluss eines Frachtstücks erst dann ermittelt werden, wenn es sich bereits an Bord befindet. Erst zu diesem Zeitpunkt zeigt sich, ob Frachtstücke verschoben oder gar ausgeladen werden müssen.

Dokument US-A-2004/226996 offenbart ein Verfahren und eine Vorrichtung zur Kontrolle des Beladungsprozesses eines Flugzeugs. Die Dokumente WO-A-01/90707 und US-A-4446524 befassen sich mit der Erstellung eines Beladeplans für ein Flugzeug.

### Darstellung der Erfindung

Daher ergibt sich die Aufgabe der vorliegenden Erfindung, ein verbessertes System zur Kontrolle des Be- und/oder Entladeprozesses eines Flugzeugs unter Vermeidung der oben genannten Nachteile bereitzustellen.

Gelöst wird die Aufgabe erfindungsgemäß durch ein Verfahren gemäß dem Patentanspruch 1 und eine Vorrichtung gemäß dem Patentanspruch 10. Weitere vorteilhafte Ausgestaltungsformen sind den abhängigen Patentansprüchen zu entnehmen. Im Folgenden wird eine gattungsgemäße Vorrichtung auch als W&B-System (Weight & Balance) bezeichnet.

Bei der Kontrolle des Be- und/oder Entladeprozesses wird ein in das Flugzeug eingebrachtes oder einzubringendes Frachtstück identifiziert, dem Frachtstück ein Gewicht zugeordnet, die Position des Frachtstücks innerhalb des Flugzeugs verfolgt und das Gesamtgewicht und/oder der Schwerpunkt des Flugzeugs aus bereitgestellten Flugzeuginformationen sowie den Gewichten und Positionen der Frachtstücke berechnet. Bei den Flugzeuginformationen handelt es sich beispielsweise um Informationen über das Gewicht und den Schwerpunkt des leeren Flugzeugs, Daten über Gewicht und Lagerort des Treibstoffs sowie sonstiger Gegenstände und Flüssigkeiten wie beispielsweise Trinkwasser oder Catering-Wagen.

Eine erfindungsgemäße Vorrichtung weist auf Mittel zur Identifizierung eines in das Flugzeug eingebrachten oder einzubringenden Frachtstücks, mindestens eine Schnittstel-le zum Anschluss der Vorrichtung an mindestens ein System zur Ermittlung der Frachtstückposition und mindestens eine Recheneinheit zur Berechnung des Gesamtgewichts und/oder des Schwerpunkts des Flugzeugs aus bereitgestellten Flugzeuginformationen sowie den Gewichten und Positionen der Frachtstücke. Die Recheneinheit wird auch als WCU (Weight Calculation Unit) bezeichnet.
Die Ermittlung beziehungsweise Verfolgung der Position des Frachtstücks innerhalb des Flugzeugs erfolgt bevorzugt mittels eines Frachtladesystems. Bei einem Frachtladesystem handelt es sich um ein bekanntes System an Bord eines Flugzeugs, mittels dessen die Frachtstücke befördert und fixiert werden können. Ein solches System verfügt einerseits über Aktoren wie Rollenförderer (PDU, Power Drive Unit) zur Bewegung der Frachtstücke und andererseits über Sensoren wie beispielsweise Überdeckungssensoren der PDUs oder Näherungsschalter zur Bestimmung der Position der Frachtstücke. Die Sensordaten werden, eventuell in aufbereiteter Form, über die Schnittstelle an die WCU übertragen. Dadurch kann das W&B-System die Frachtstückposition verfolgen. Die Positionsbestimmung kann zusätzlich durch weitere Sensoren oder sonstige Vorrichtungen, wie beispielsweise eine Bilderfassung und -verarbeitung erfolgen. Das W&B-System ist bevorzugt über den CAN-Bus (Controller Area Network) mit dem Frachtladesystem verbunden.

Alternative Systeme zur Ermittlung beziehungsweise Verfolgung der Position des Frachtstücks innerhalb des Flugzeugs sind zum Beispiel laser- oder infrarotbasierte Systeme, Ultraschallsysteme oder optische Systeme auf Basis von Bilderkennung.

Optional wird aus den Flugzeuginformationen, den Gewichten und Positionen der Frachtstücke und dem Status des Frachtladesystems der zukünftige Schwerpunkt des Flugzeugs prognostiziert. Aus der aktuellen Position des Frachtstücks und der Förderrichtung der PDUs ist die zukünftige Position des Frachtstücks extrapolierbar, wodurch kritische Beladezustände bereits vor deren Eintreten erkennbar sind.

Die Flugzeuginformationen und/oder die Gewichte der Frachtstücke werden beispielsweise manuell erfasst, über ein Kabel oder einen Datenträger eingespielt oder per infrarot beziehungsweise Funk empfangen. Bevorzugt weist die Vorrichtung jedoch eine Schnittstelle zu einem Flugzeug-Datenbus, beispielsweise einem AFDX-Bus (Avionics Full Duplex Network) auf, über den der WCU die Informationen bereitgestellt werden. Dies erfolgt zum Beispiel durch das EICAS (Engine Indicating and Crew Alerting System).

Es ist auch eine ständige Aktualisierung möglich, wie sie unter anderem während des Betankungsvorgangs sinnvoll ist.

Die Identifizierung der Frachtstücke erfolgt beispielsweise mittels einer Tastatur, eines Touchscreens, eines Strichcodelesers und/oder eines Empfängers für Infrarot- oder Funksignale wie zum Beispiel einem RFID-Empfänger (Radio Frequency IDentification). In einer Ausführungsform der Erfindung erfolgt die Identifizierung eines Frachtstücks bereits unmittelbar vor dem Einfahren in den Frachtraum, beispielsweise auf einer Hebebühne oder einer Fördereinrichtung wie einem Förderband direkt vor der Frachtraumtür. Somit ist die Prognose des Gewichts und/oder des Schwerpunkts des Flugzeugs schon vor dem Einfahren des Frachtstücks möglich. Eine Warnung des Beladepersonals oder ein Abschalten des Frachtladesystems kann somit erfolgen, bevor das Frachtstück in das Flugzeug eingefahren wird und einen unerwünschten Beladungszustand verursacht.

Die Identifizierung wird weiterhin optional dazu genutzt, die im Beladeplan vorgesehene Beladereihenfolge zu überprüfen. Somit wird sichergestellt, dass die Frachtstücke in der richtigen Reihenfolge eingeladen werden und die Endpostion oder den Transportweg eines später einzufahrenden Frachtstücks nicht blockieren, was zu einem teilweisen Ausladen des Frachtraums führen könnte. Optional wird die Information, dass ein Frachtstück identifiziert und in das Flugzeug eingefahren wurde, an das Logistiksystem gemeldet, um ein Verfolgen von Frachtstücken in der Logistikkette zu ermöglichen.

Die Gewichte der Frachtstücke werden beispielsweise mittels Waagen im Verladesystem des Flughafens oder im Verlauf der Logistikkette bestimmt und dem W&B-System mittels einer Tastatur, eines Touchscreens, eines Strichcodelesers und/oder eines Empfängers für Infrarot- oder Funksignale wie zum Beispiel einem RFID-Empfänger eingegeben. Alternativ ist das jeweilige Gewicht auf dem entsprechenden Frachtstück vermerkt und wird bei der Identifizierung eingelesen. Optional wird das Gewicht durch eine im Flugzeug angeordnete Waage ermittelt und/oder verifiziert. Die Waage ist beispielsweise im Bereich der Kugelmatten an der Frachtraumtür angeordnet.

In vorteilhafter Weise verfügt das W&B-System über mindestens eine Anzeigevorrichtung zum Anzeigen des Gewichts und/oder Schwerpunkts des Flugzeugs. Diese Anzeigevorrichtung kann für sich alleine stehen, mit einem Eingabemittel wie einer Tastatur, einem Strichcodeleser oder einem Empfänger kombiniert oder in eine Bedien- und Kontrollkonsole integriert sein. Weiterhin ist es möglich, dass zur Anzeige bereits existierende Vorrichtungen, wie das EICAS oder sonstige Bedien- und Kontrollkonsolen verwendet werden. Angezeigt werden können alternativ oder zusätzlich das Gewicht eines Frachtstücks, aller Frachtstücke in einem Frachtdeck und/oder der Frachtstücke in allen Frachträumen.

Außerdem bietet sich an, in kritischen Situationen einen visuellen und / oder akustischen Alarm auszulösen oder eine Warnung auszugeben. Dies kann beispielsweise bei der Gefahr einer als Tail Tip bezeichneten Situation erfolgen, bei der das Heck des Flugzeugs bei Be- oder Entladen in Kontakt mit dem Boden zu kommen droht. Weiterhin könnte der Alarm ausgelöst werden, falls sich der Schwerpunkt des Flugzeugs aus dem zulässigen Bereich entfernt oder zu entfernen droht, was zu einer verschlechterten Fluglage und der Notwendigkeit starken Gegensteuerns im Flug führt.

In einer weiteren vorteilhaften Ausgestaltungsform ist das W&B-System mit einem internen Wartungssystem (OMS: Onboard Maintenance System) verbunden. Auf diese Weise lässt sich im Fehlerfall eine einfache Diagnose unter Zuhilfenahme eines bekannten und vertrauten Wartungssystems vornehmen.

Neben der Bestimmung des Gewichts und/oder Schwerpunkts des Flugzeugs werden optional die Positionen der Frachtstücke mit dem Beladungsplan verglichen. Dadurch lässt sich die Einhaltung des Beladeplans verifizieren oder das Fehlen eines Frachtstücks erkennen. Ein nicht im Beladeplan aufgeführtes Frachtstück ist bereits bei seiner Identifizierung beim Einbringen in den Frachtraum erkennbar. Optional ist es möglich, zu Informationszwecken vergangene, momentane und prognostizierte Beladungszustände zu speichern.

Mit dem vorstehend beschriebenen W&B-System lässt sich die Beladung sowohl von einem als auch von mehreren Frachträumen eines Flugzeugs kontrollieren. Bei der Kontrolle mehrer Frachträume ist bevorzugt im Bereich jeder Frachtraumtür ein Mittel zur Identifizierung eines eingebrachten Frachtstücks angeordnet. Die Berechnung des Gewichts und/oder des Schwerpunkts erfolgt beispielsweise mittels einer einzigen Recheneinheit.

Neben dieser zentral organisierten Struktur des W&B-Systems, bei der eine WCU sämtliche Frachträume überwacht, besteht weiterhin die Möglichkeit einer Untergliederung der Vorrichtung in Subsysteme, die in den einzelnen Frachträumen angeordnet und untereinander mittels eines Bus-Systems verbunden sind. Auch hierfür bietet sich der CAN-Bus an. Dabei sind die WCUs in vorteilhafter Weise in Master-Slave-Anordnung vernetzt, wobei nur der Master über eine Schnittstelle zur Verbindung mit dem AFDX-Bus des Flugzeugs verfügt. Dadurch muss nur ein Gerät in den Datenbus des Flugzeugs eingebunden werden.

Bevorzugt ermittelt jede WCU das Gewicht und die Gewichtsverteilung der in dem zugehörigen Frachtraum oder den zugehörigen Frachträumen befindlichen Frachtstücke und übermittelt diese Daten an die Master-WCU, die daraus das Gesamtgewicht und/oder den Schwerpunkt des Flugzeugs berechnet. Alternativ erhält jede der WCUs die Daten aus allen Frachträumen und berechnet das Gesamtgewicht und/oder den Schwerpunkt des Flugzeugs. Dadurch wird eine Redundanz der Berechnung erzielt.

### Kurze Beschreibung der Zeichnung

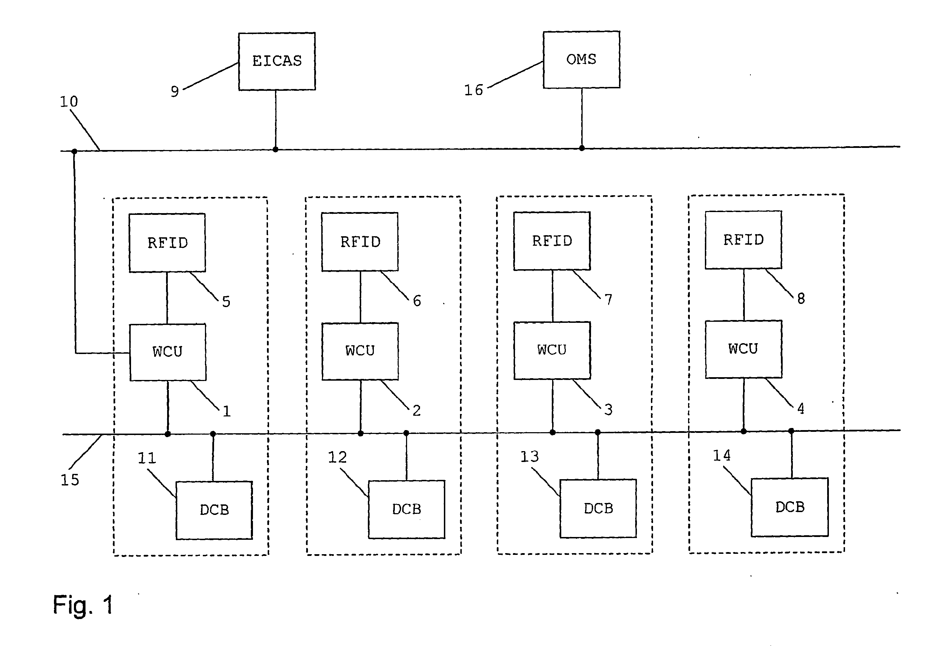

Die Erfindung soll anhand eines Ausführungsbeispiels näher erläutert werden. Dabei zeigt Figur 1 ein verteiltes W&B-System mit mehreren WCUs

### Wege zur Ausführung der Erfindung

Dieses Ausführungsbeispiel zeigt die Verwendung eines erfindungsgemäßen W&B-Systems in einem Airbus A380-800. Flugzeuge dieses Typs sind mit einem AFDX-Datenbus 10 ausgerüstet und verfügen über insgesamt vier Frachtdecks (Hauptdeck, oberes Deck, unteres Deck vorne und unteres Deck hinten). Im Rahmen dieses Ausführungsbeispiels wird ein verteiltes System eingesetzt, bei dem jedes Frachtdeck mit einer WCU 1 - 4 ausgerüstet ist. Die WCUs sind untereinander über einen CAN-Bus 15 in einer Master-Slave-Anordnung verbunden, wobei die Master-WCU 1 zusätzlich über eine Schnittstelle zum Anschluss an den AFDX-Bus 10 verfügt. Das ebenfalls an diesen Bus angeschlossene EICAS 9 stellt den WCUs 1 - 4 grundlegende Informationen wie das Gewicht und den Schwerpunkt des unbeladenen Flugzeugs, Gewicht und Lagerort des Treibstoffs sowie weiterer Gegenstände zur Verfügung. Über den AFDX-Bus 10 besteht darüber hinaus eine Verbindung zwischen dem W&B-System und dem im Flugzeug vorhandenen Onboard Maintenance System (OMS) 16. Somit ist eine einfache Wartung des Systems möglich.

Ober den CAN-Bus 15 sind die WCUs 1 - 4 weiterhin mit den Door area Control Boxes (DCB) 11 - 14 und somit den Frachtladesystemen in den einzelnen Frachtdecks verbunden. Die DCBs dienen der Steuerung der Rollenförderer im Frachtraum, zum Beispiel mittels eines Joysticks. Die WCUs 1 - 4 sind außerdem mit RFID-Lesem 5 - 8 verbunden. Mittels der RFID-Leser 5 - 8 werden die in die Frachträume eingebrachten Frachtstücke identifiziert. Zu jedem Frachtstück ist in den WCUs 1 - 4 das jeweilige Gewicht hinterlegt. Die einem Frachtdeck zugeordneten Komponenten sind jeweils mit einem gestrichelten Viereck umrahmt.

Über den AFDX-Bus 10 empfängt die WCU 1 vom EICAS 9 die grundlegenden Daten über das unbeladene Flugzeug. Wird ein neues Frachtstück in das Flugzeug verladen, so wird die Identifizierung des Frachtstücks über RFID ausgelesen und in der dem Frachtdeck zugeordneten WCU dem Frachtstück ein Gewicht zugeordnet. Mit diesem Gewicht und den Informationen über bereits eingeladene Frachtstücke berechnen die WCUs 1 - 4 das Gewicht und die Gewichtsverteilung der Frachtstücke in den jeweiligen Frachtdecks und übermitteln diese Daten an die WCU 1, die das Gesamtgewicht und/oder den Schwerpunkt des Flugzeugs mitsamt Ladung berechnet. Diese Werte können sowohl über den AFDX-Bus 10 an das EICAS 9 übertragen und im Cockpit angezeigt werden, als auch über den CAN-Bus 15 an die DCBs 11 - 14, um in den einzelnen Frachtdecks dargestellt zu werden.

Mit Hilfe des Frachtladesystems wird das Frachtstück innerhalb des Frachtdecks an seine endgültige Position transportiert. Dabei erfassen Sensoren des Frachtladesystems ständig die aktuelle Position und melden diese über den CAN-Bus 15 an die zuständige WCU. Diese berechnet aus diesen Daten laufend die momentane Schwerpunktlage der Frachtstücke im Frachtdeck und übermittelt diese an die Master-WCU 1. Diese berechnet laufend das Gewicht und/oder den Schwerpunkt des Flugzeugs und vergleicht diese Werte mit festgelegten Grenzwerten. Sollten diese überschritten werden, so werden die Rollenförderer der Frachtladesysteme gestoppt und/oder ein entsprechender Alarm ausgelöst. Durch die Erfassung der Endpositionen der Frachtstücke kann die Einhaltung des Beladeplans kontrolliert und eventuell eine Nachbesserung veranlasst werden.

Das oben angeführte Ausführungsbeispiel ist rein exemplarisch und daher nicht als beschränkend zu verstehen. Insbesondere können die Art und Anzahl der Komponenten sowie deren Anordnung variiert werden, ohne den Erfindungsgedanken zu verlassen. Gleichfalls ist die Anwendung nicht auf Flugzeuge beschränkt, sondern kann auch auf andere Transportmittel wie Hubschrauber und Schiffe übertragen werden. Auch ist eine abweichende Verteilung der Berechnungen auf die WCUs möglich.

In einer Weiterbildung der Erfindung erhält das W&B-System neben dem Gewicht der Frachtstücke auch deren jeweilige Schwerpunkte, wodurch eine noch genauere Berechnung des Schwerpunkts des Flugzeugs möglich ist.

### BEZUGSZEICHENLISTE

- 1: WCU
- 2: WCU
- 3: WCU
- 4: WCU
- 5: RFID-Empfänger
- 6: RFID-Empfänger
- 7: RFID-Empfänger
- 8: RFID-Empfänger
- 9: EICAS
- 10: AFDX-Bus
- 11: DCB
- 12: DCB
- 13: DCB
- 14: DCB
- 15: CAN-Bus
- 16: OMS

## Patentansprüche

1. Verfahren zur Kontrolle des Be- und/oder Entladeprozesses eines Flugzeugs, wobei ein in das Flugzeug eingebrachtes oder einzubringendes Frachtstück identifiziert wird und dem Frachtstück ein Gewicht zugeordnet wird, **dadurch gekennzeichnet, dass** die Position des Frachtstücks innerhalb eines Frachtdecks des Flugzeugs ständig verfolgt wird und das Gesamtgewicht und/oder der Schwerpunkt des Flugzeugs aus bereitgestellten Flugzeuginformationen sowie den Gewichten und Positionen der Frachtstücke laufend berechnet wird.

2. Verfahren nach Anspruch 1, **dadurch gekennzeichnet, dass** die Identifizierung des Frachtstücks mittels einer Tastatur, eines Touchscreens, eines Strichcodelesers und/oder eines Empfängers für Infrarot- oder Funksignale (5 - 8) erfolgt.

3. Verfahren nach Anspruch 1 oder 2, **dadurch gekennzeichnet, dass** das Frachtstück bereits unmittelbar vor dem Einfahren in den Frachtraum identifiziert wird.

4. Verfahren nach einem der Ansprüche 1 bis 3, **dadurch gekennzeichnet, dass** die Position des Frachtstücks innerhalb des Flugzeugs mittels eines Frachtladesystems verfolgt wird.

5. Verfahren nach einem der Ansprüche 1 bis 4, **dadurch gekennzeichnet, dass** aus den Flugzeuginformationen, den Gewichten und Positionen der Frachtstücke und dem Status des Frachtladesystems der zukünftige Schwerpunkt des Flugzeugs prognostiziert wird.

6. Verfahren nach einem der Ansprüche 1 bis 5, **dadurch gekennzeichnet, dass** beim Überschreiten eines Grenzwertes für das Gewicht und/oder den Schwerpunkt des Flugzeugs eine Warnung ausgegeben wird.

7. Verfahren nach einem der Ansprüche 1 bis 6, **dadurch gekennzeichnet, dass** das Gewicht des Frachtstücks innerhalb des Flugzeugs verifiziert wird.

8. Verfahren nach einem der Ansprüche 1 bis 7, **dadurch gekennzeichnet, dass** die Positionen der Frachtstücke mit einem Beladeplan verglichen werden.

9. Verfahren nach einem der Ansprüche 1 bis 8, **dadurch gekennzeichnet, dass** das Gewicht und/oder der Schwerpunkt des Flugzeugs angezeigt wird.

10. Vorrichtung zur Kontrolle des Be- und/oder Entladeprozesses eines Flugzeugs, aufweisend Mittel (5 - 8) zur Identifizierung eines in das Flugzeug eingebrachten oder einzubringenden Frachtstücks, **gekennzeichnet durch** mindestens eine Schnittstelle (15) zum Anschluss der Vorrichtung an mindestens ein System zur ständigen Ermittlung der Frachtstückposition und mindestens eine Recheneinheit (1 - 4) zur laufenden Berechnung des Gesamtgewichts und/oder des Schwerpunkts des Flugzeugs aus bereitgestellten Flugzeuginformationen sowie den Gewichten und Positionen der Frachtstücke.

11. Vorrichtung nach Anspruch 10, **dadurch gekennzeichnet, dass** es sich bei dem System zur Ermittlung der Frachtstückposition um ein Frachtladesystem handelt.

12. Vorrichtung nach Anspruch 10 oder 11, **gekennzeichnet durch** eine Schnittstelle (10) zum Anschluss der Vorrichtung an einen Datenbus des Flugzeugs.

13. Vorrichtung nach einem der Ansprüche 10 bis 12, **dadurch gekennzeichnet, dass** es sich bei dem Mittel (5 - 8) zur Identifizierung des Frachtstücks um eine Tastatur, einen Touchscreen, einen Strichcodeleser und/oder einen Empfänger für Infrarot- oder Funksignale handelt.

14. Vorrichtung nach einem der Ansprüche 10 bis 13, **gekennzeichnet durch** eine Schnittstelle (10) zur Verbindung mit einem Onboard-Maintenance-System (16).

15. Vorrichtung nach einem der Ansprüche 10 bis 14, **gekennzeichnet durch** eine Untergliederung der Vorrichtung in Subsysteme, die in den einzelnen Frachträumen angeordnet und untereinander mittels eines Bus-Systems (15) verbunden sind.

16. Vorrichtung nach einem der Ansprüche 10 bis 15, **gekennzeichnet durch** mindestens eine Anzeigevorrichtung zum Anzeigen des Gewichts und/oder Schwerpunkts des Flugzeugs.

17. Vorrichtung nach einem der Ansprüche 10 bis 16, **gekennzeichnet durch** eine im Flugzeug angeordnete Waage zur Kontrolle des Gewichts des Frachtstücks.

## Claims

1. Method for monitoring the loading and/or unloading process of an aircraft, wherein
- a piece of freight which has been introduced or is to be introduced into the aircraft is identified,
- the piece of freight is associated with a weight,
- the position of the piece of freight within a cargo deck of the aircraft is tracked continuously, and
- the total weight and/or the centre of gravity of the aircraft is calculated continuously from aircraft information that is provided as well as the weights and positions of the pieces of freight.

2. Method according to Claim 1, **characterized in that** the piece of freight is identified by means of a keyboard, a touch screen, a barcode reader and/or a receiver for infrared or radio signals (5-8).

3. Method according to Claim 1 or 2, **characterized in that** the piece of freight is actually identified immediately before being moved into the cargo bay.

4. Method according to one of Claims 1 to 3, **characterized in that** the position of the piece of freight within the aircraft is tracked by means of a cargo loading system.

5. Method according to one of Claims 1 to 4, **characterized in that** the future centre of gravity of the aircraft is predicted from the aircraft information, the weights and positions of the pieces of freight, and the status of the cargo loading system.

6. Method according to one of Claims 1 to 5, **characterized in that** a warning is emitted if a limit value for the weight and/or the centre of gravity of the aircraft is overshot.

7. Method according to one of Claims 1 to 6, **characterized in that** the weight of the piece of freight is verified within the aircraft.

8. Method according to one of Claims 1 to 7, **characterized in that** the positions of the pieces of freight are compared with a loading plan.

9. Method according to one of Claims 1 to 8, **characterized in that** the weight and/or the centre of gravity of the aircraft are/is indicated.

10. Apparatus for monitoring the loading and/or unloading process of an aircraft, having
- means (5-8) for identification of a piece of freight which has been introduced or is to be introduced into a cargo deck of the aircraft,
- at least one interface (15) for connection of the apparatus to at least one system for continuous determination of the position of the pieces of freight, and
- at least one computation unit (1-4) for continuous calculation of the total weight and/or of the centre of gravity of the aircraft from aircraft information that is provided as well as the weights and positions of the pieces of freight.

11. Apparatus according to Claim 10, **characterized in that** the system for determining the position of the pieces of freight is a cargo loading system.

12. Apparatus according to Claim 10 or 11, **characterized by** an interface (10) for connection of the apparatus to a data bus in the aircraft.

13. Apparatus according to one of Claims 10 to 12, **characterized in that** the means (5-8) for identification of the piece of freight is a keyboard, a touch screen, a barcode reader and/or a receiver for infrared or radio signals.

14. Apparatus according to one of Claims 10 to 13, **characterized by** an interface (10) for connection to an on-board maintenance system (16).

15. Apparatus according to one of Claims 10 to 14, **characterized by** the apparatus being subdivided into subsystems which are arranged in the individual cargo bays and are connected to one another by means of a bus system (15).

16. Apparatus according to one of Claims 10 to 15, **characterized by** at least one indication apparatus for indication of weight and/or the centre of gravity of the aircraft.

17. Apparatus according to one of Claims 10 to 16, **characterized by** a scale, which is arranged in the aircraft, for monitoring the weight of the piece of freight.

## Revendications

1. Procédé de contrôle de l'opération de chargement et/ou de déchargement d'un aéronef, selon lequel
- un colis introduit ou à introduire dans l'aéronef est identifié,
- un poids est associé au colis,
- la position du colis à l'intérieur d'une soute à cargaison de l'aéronef est constamment suivie et
- le poids total et/ou le centre de gravité de l'aéronef est continuellement calculé à partir des informations communiquées sur l'aéronef ainsi que des poids et des positions des colis.

2. Procédé selon la revendication 1, **caractérisé en ce que** l'identification du colis s'effectue au moyen d'un clavier, d'un écran tactile, d'un lecteur de code à barres et/ou d'un récepteur de signaux infrarouges ou radioélectriques (5 - 8).

3. Procédé selon la revendication 1 ou 2, **caractérisé en ce que** le colis est déjà identifié immédiatement avant d'entrer dans l'espace de la cargaison.

4. Procédé selon l'une des revendications 1 à 3, **caractérisé en ce que** la position du colis à l'intérieur de l'aéronef est suivie au moyen d'un système de chargement de la cargaison.

5. Procédé selon l'une des revendications 1 à 4, **caractérisé en ce que** le futur centre de gravité de l'aéronef est prédit à partir des informations sur l'aéronef, des poids et des positions des colis et de l'état du système de chargement de la cargaison.

6. Procédé selon l'une des revendications 1 à 5, **caractérisé en ce qu'**une alerte est émise en cas de dépassement d'une valeur limite pour le poids et/ou le centre de gravité de l'aéronef.

7. Procédé selon l'une des revendications 1 à 6, **caractérisé en ce que** le poids du colis est vérifié à l'intérieur de l'aéronef.

8. Procédé selon l'une des revendications 1 à 7, **caractérisé en ce que** les positions des colis sont comparées avec un plan de chargement.

9. Procédé selon l'une des revendications 1 à 8, **caractérisé en ce que** le poids et/ou le centre de gravité de l'aéronef est indiqué.

10. Dispositif de contrôle de l'opération de chargement et/ou de déchargement d'un aéronef, comprenant
- des moyens (5 - 8) pour identifier un colis introduit ou à introduire dans une soute à cargaison de l'aéronef,
- au moins une interface (15) pour raccorder le dispositif à au moins un système de détermination constante de la position du colis et
- au moins une unité de calcul (1 - 4) pour calculer constamment le poids total et/ou le centre de gravité de l'aéronef à partir des informations communiquées sur l'aéronef ainsi que des poids et des positions des colis.

11. Dispositif selon la revendication 10, **caractérisé en ce que** le système de détermination de la position du colis est un système de chargement de la cargaison.

12. Dispositif selon la revendication 10 ou 11, **caractérisé par** une interface (10) pour raccorder le dispositif à un bus de données de l'aéronef.

13. Dispositif selon l'une des revendications 10 à 12, **caractérisé en ce que** les moyens (5 - 8) pour identifier le colis sont un clavier, un écran tactile, un lecteur de code à barres et/ou un récepteur de signaux infrarouges ou radioélectriques.

14. Dispositif selon l'une des revendications 10 à 13, **caractérisé par** une interface (10) pour le raccordement à un système de maintenance embarqué (16).

15. Dispositif selon l'une des revendications 10 à 14, **caractérisé par** une subdivision du dispositif en sous-systèmes qui sont disposés dans les espaces de cargaison individuels et sont reliés entre eux au moyen d'un système de bus (15).

16. Dispositif selon l'une des revendications 10 à 15, **caractérisé par** au moins un dispositif d'affichage pour afficher le poids et/ou le centre de gravité de l'aéronef.

17. Dispositif selon l'une des revendications 10 à 16, **caractérisé par** une balance disposée dans l'aéronef pour contrôler le poids du colis.
